## Europäisches Patentamt
## European Patent Office
## Office européen des brevets

(11) Numéro de publication: **0 021 903**
**B1**

(12) # FASCICULE DE BREVET EUROPEEN

(45) Date de publication du fascicule du brevet:
**01.02.84**

(51) Int. Cl.³: **A 61 C 5/12**

(21) Numéro de dépôt: **80400781.3**

(22) Date de dépôt: **03.06.80**

(54) Matrice avec point de contact et son porte-matrice pour obturation dentaire.

(30) Priorité: **12.06.79 FR 7914929**

(43) Date de publication de la demande:
**07.01.81 Bulletin 81/1**

(45) Mention de la délivrance du brevet:
**01.02.84 Bulletin 84/5**

(84) Etats contractants désignés:
**AT BE CH DE GB IT LI NL SE**

(56) Documents cités:
**FR - A - 941 104**
**US - A - 3 482 314**

(73) Titulaire: **Salsarulo, Angélo Georges, 45 rue Jean Mermoz, F-78620 Etang-La-Ville (FR)**

(72) Inventeur: **Salsarulo, Angélo Georges, 45 rue Jean Mermoz, F-78620 Etang-La-Ville (FR)**

BUNDESDRUCKEREI BERLIN

Matrice avec point de contact et son
porte-matrice pour obturation dentaire

La présente invention concerne les instruments du type matrice, porte-matrice, dentaires permettant l'insertion d'un matériau d'obturation à phase plastique, amalgame, composite, dans une cavité dentaire proximo-occlusale.

Une matrice est une simple bande, métallique en général, entourant la dent à traiter soit entièrement comme une bague, soit seulement sur une face proximale à obturer (demi-matrice). Dans le premier cas, elle est constituée d'une bague ou similaire et ne nécessite, alors, pas de porte-matrice; ou bien elle est formée d'une bande de forme anatomique munie à ses extrémités de languettes; lors de la mise en place, ces languettes sont saisies par le porte matrice, sorte d'outil-étau à vis de réglage; elles peuvent aussi être cerclées par un anneau (US-A-3 482 314) après serrage. Les matrices mono-proximales, ou demi-matrices, nécessitent obligatoirement un porte-matrice. Celui-ci est soit une pince, avec ou sans coins métalliques aux extrémités des bras, soit un anneau élastique métallique ouvert muni de deux plats perpendiculaires servant d'appui à ses extrémités. Dans le domaine dentaire, en outre, est utilisé, pour fixer une bande protectrice (ou digue) en caoutchouc sur la dent à traiter, un crampon ou clamp (anneau élastique, en métal ou similaire, ouvert et muni à ses extrémités de deux mâchoires perpendiculaires au plan de l'anneau). Un étrier en fil, sous la forme d'une boucle fermée enroulée en hélice, dans un plan perpendiculaire ou parallèle aux mâchoires, a aussi été proposé (FR-A-941 104).

Les instruments connus à ce jour ne permettent pas la réalisation d'une zone de contact satisfaisante sans écartement préalable de la dent par rapport à son adjacente. De plus, la sculpture occlusale de l'obturation est faite avec des instruments à main et l'état de surface qui en résilte rend obligatoire un polissage long et fastidieux. Enfin, les porte-matrices habituels qui maintiennent la matrice autour de la dent demandent l'insertion d'un coin de bois pour éviter un débordement cervical de l'obturation.

Les instruments nouvellement conçus suivant l'invention permettent d'éviter nombre d'inconvénients. En effet, le dispositif de la matrice avec sa pièce-point de contact, détachable de la matrice et restant insérée dans l'obturation après la prise du matériau, permet la réalisation immédiate d'une zone de contact cliniquement parfaite, puisqu'au contact même de la dent voisine, et parfaitement polie, deux choses jamais réalisées extemporanément avec des matériaux foulés tels que l'amalgame ou le composite. D'autre part, la compréssion dans le matériau de la partie supérieure de la matrice, représentant une face occlusale pré-formée, permet une sculpture anatomique rapide et il en résulte un état de surface voisin du poli, et donc le polissage qui suivra en sera d'autant allégé et rapide. Le porte-matrice nouvellement conçu suivant l'invention rend inutile l'insertion d'un coin de bois grâce à son cintrage de la matrice sur le bord cervical de la cavité.

La matrice avec point de contact et avec son porte-matrice, objet de la présente invention, comporte trois parties. Celles-ci sont complémentaires mais peuvent aussi être utilisées séparément selon la technique du praticien.

Les dessins annexes illustrent à titre d'exemple un mode de réalisation de l'instrument conforme à la présente invention.

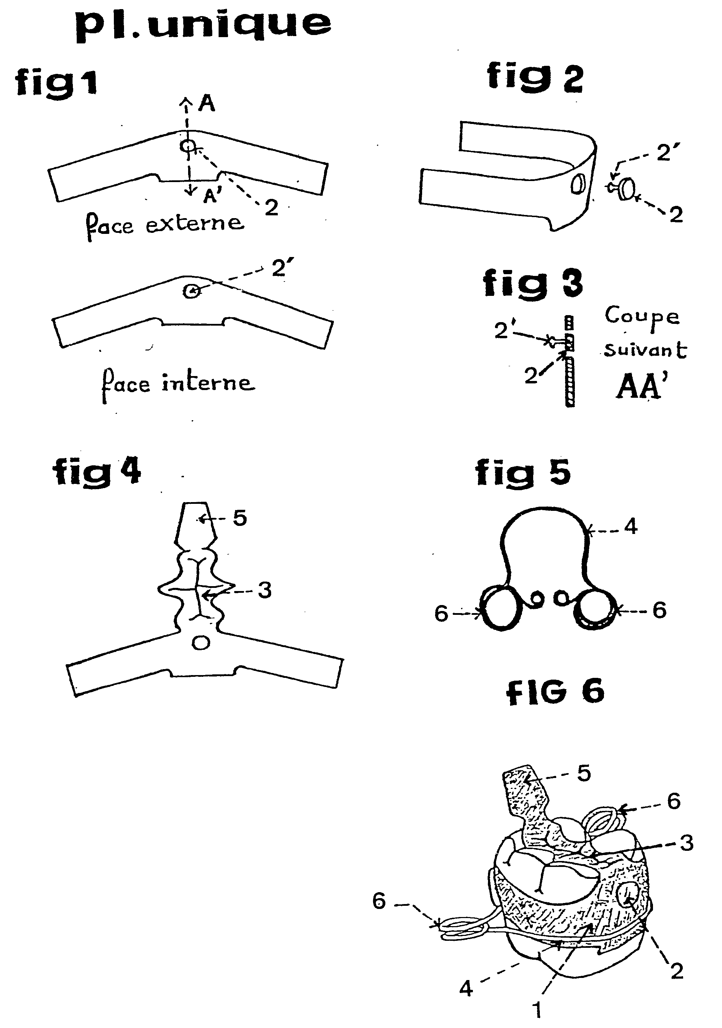

La figure 1 montre une matrice simple, sans la partie supérieure occlusale.

La figure 2 montre la matrice de profil avec sa pièce point de contact détachable.

La figure 3 montre une coupe transversale suivant AA' de la figure 1.

La figure 4 montre la même matrice face externe complétée de la partie supérieure occlusale représentent la sculpture d'une molaire.

La figure 5 montre le porte-matrice.

La figure 6 récapitule l'instrument complet mis en place sur une molaire.

1. La matrice (1) est une bande de 2/100° à 1/10° de mm d'épaisseur en acier inoxydable ou aluminium, ou autres matériaux comme des alliages et des matières plastiques. Sa longueur et sa largeur varient avec l'anatomie dentaire. Elle comporte dans son milieu, à l'endroit du contact avec la dent voisine, une découpe ou ouverture dans laquelle se place une pièce-point de contact (2) qui, grâce à un moyen de rétention (2') côté interne, restera insérée dans le matériau d'obturation dentaire condensé dans la cavité, après la prise de celui-ci. Ainsi la pièce-point de contact (2), dont la face externe est polie et tournée vers la dent voisine, matérialisera, une fois la matrice enlevée, le véritable contact avec la dent voisine.

Cette pièce-point de contact est de forme ronde, ovale, carrée, rectangulaire ou trapézoidale; ses dimensions sont variables allant jusqu'à représenter la face proximale de la dent à obturer. Le moyen de rétention (2') peut être constitué d'une protubérance ou saillie ou encore d'un moyen de rétention chimique du type collage aux résines époxy, cyano-acrylates ou silicones.

Lors de la manipulation, la pièce-point de contact (2) et la matrice (1) sont réunies grâce à un procédé d'adhésion tel que: film adhésif, papier ou tissu adhésif, cire ou autre procédé de collage permettant le décollement à la demande des deux parties. Dans le cas d'un papier, film, tissu adhésif, celui-ci présentera sur sa face externe une fenêtre, de dimension inférieure à la pièce-point de contact (2), pour permettre le contact propre de la pièce-point de contact (2) avec la dent voisine. Dans l'exemple cité la pièce-point de contact (2) étant une partie même de la matrice (1), ces deux pièces sont d'un même matériau, or elles peuvent être de matériaux différents. Dans ce cas, le point de contact est une pièce rapportée, de même dimension que la découpe, et maintenu à la matrice par un des procédés de collage cités plus haut. Cette pièce sera en or, alliages précieux, semi-précieux, nickel-chrome, acier, porcelaine dentaire, résines synthétiques, tout matériau compatible avec les conditions buccales.

2. La partie supérieure (3) du coffrahe reproduisant la morphologie occlusale de la dent concernée permettra, après condensation du matériau dans la cavité dentaire, de reproduire par compression une sculpture occlusale anatomique et un état de surface prêt à polir. Ces deux parties, matrice (1) et partie supérieure occlusale (3), se rejoignent au niveau de la crête marginale. La partis terminale (5) sert à la préhension digitale de l'instrument.

3. Le porte-matrice (4) est un fil métallique de section ronde, carrée, rectangulaire, demi-jonc, de 7/10° à 1 millimètre d'épaisseur en acier ou alliages, formant un anneau ouvert avec deux ressorts latéraux (6). Ceux-ci sont placés au niveau de la face proximale opposée à l'obturation et prennent appui sur celle-ci. Ils exercent donc une force horizontale qui plaque la matrice (1) contre le bord cervical de la cavité dentaire.
Le porte-matrice (4) maintient en place la matrice (1).

## Revendications

1. Instrument du type matrice servant à la réalisation d'une obturation dentaire et formé d'une bande (1), métallique ou en un autre matériau, placée sur au moins une face proximale d'une dent, caractérisé en ce que, dans sa partie centrale au niveau de l'obturation et à l'endroit du contact avec la dent voisine, cette bande comporte une ouverture dans laquelle est maintenue de façon détachable une pièce (2), qui sert de point de contact avec la dent voisine.

2. Instrument selon la revendication 1 caractérisé en ce que la pièce-point de contact (2) comporte sur sa face dirigée vers la dent à obturer un moyen de rétention (2'), qui permet le maintien de la pièce-point de contact (2) dans le matériau d'obturation après la prise de celui-ci.

3. Instrument selon la revendication 2, caractérisé en ce que le moyen de rétention (2') peut être constitué d'une protubérance ou saillie ou d'un moyen de rétention chimique du type collage aux résines époxy, cyano-acrylates ou silicones.

4. Instrument selon la revendication 1, caractérisé en ce que la pièce-point de contact (2) est polie sur sa face externe, tournée vers la dent voisine.

5. Instrument selon la revendication 1, caractérisé en ce que la pièce-point de contact (2) est de forme ronde, carrée, rectangulaire ou trapézoïdale et de dimension variable allant jusqu'à représenter la face proximale à restaurer.

6. Instrument selon la revendication 1, caractérisé en ce que la pièce-point de contact (2) est maintenue au reste de la bande (1) par un procédé de collage appliqué sur sa face externe à la dent à obturer, procédé qui permet le décollement à la demande des deux parties, comme l'utilisation d'un film adhésif ou d'une cire collante.

7. Instrument selon l'use des revendications précédentes caractérisé en ce qu'il comporte, en outre, une partie supérieure occlusale (3) pré-formée à la face occlusale de la dent et constituée par une partie dérivée de la bande (1) à partir de la partie centrale du bord supérieur de cette bande matrice (1), cette partie supérieure (3) étant appliquée par compression sur le matériau d'obturation, afin de reproduire dans celui-ci la sculpture occlusale de la dent à obturer.

8. Instrument selon les revendications 1 et 7, caractérisé en ce que la bande matrice (1), la pièce-point de contact (2) et la partie supérieure (3) peuvent être fabriquées en acier, aluminium, alliages ou résines synthétiques.

9. Instrument selon la revendication 8, caractérisé par le fait que la pièce-point de contact (2) et la bande matrice (1) peuvent être réalisées en un matériau différent, compatible avec les conditions buccales.

10. Instrument du type matrice, servant à la réalisation d'une obturation dentaire et formée d'une bande (1) métallique ou en autre matériau, placée sur an moinsure face proximale d'une dent, associée avec un porte-matrice (4) caractérisé en ce qu'il comporte une matrice selon la revendication 1 et en ce que le portematrice (4) a la forme d'un anneau métallique, en acier ou alliages, de section ronde, carrée, demi-jonc ou rectangulaire, ouvert sur une partie de sa circonférence, les extrémités de l'anneau de côté de cette ouverture comportant chacune un ressort (6), le porte-matrice (4) permettant le cintrage de la matrice (1) sur le bord cervical de la cavité dentaire grâce à ses ressorts (6) qui prennent appui sur la face proximale de la dent à obturer opposée à l'obturation.

## Patentansprüche

1. Ein Instrument vom Typ Matrize, das für Zahnfüllungen gebraucht wird und das aus einem Band aus Stahl oder irgendeinem anderem Material besteht und das auf wenigstens eine proximale Oberfläche eines Zahnes angepaßt wird. Das Merkmal dieses Instrumentes ist, daß es in seinem Mittelstück, und zwar in Höhe der Zahnfüllung und am Kontaktpunkt mit dem Nachbarzahn eine Öffnung besitzt, in der ein Teil (2) befestigt ist, das auch entfernt werden kann und das als Kontaktpunkt mit dem Nachbarzahn dient.

2. Ein Instrument, das der Forderung 1 zufolge ein Kontaktstück (2) besitzt, das auf der Seite des Zahnes, der plombiert werden soll mit einem Träger (2') ausgerüstet ist, der es ermöglicht das Kontaktstück (2) in dem Plombiermaterial festzuhalten, wenn dieses getrocknet ist.

3. Ein Instrument, das der Forderung 2 zufolge einen Träger (2') besitzt, der aus einer Protuberanz, einem Höcker oder einem chemischen Klebemittel aus Epoxy-Harzen, Cyano-Acrylat-Harzen oder Siliconen besteht.

4. Ein Instrument, das der Forderung 1 zufolge ein Kontaktstück (2) besitzt, das auf der Außenseite, die dem Nachbarzahn zugekehrt ist, poliert ist.

5. Ein Instrument, das der Forderung 1 zufolge ein Kontaktstück (2) besitzt, das rund, viereckig, rechteckig, trapezoid oder mit variablen Dimensionen sein kann und sogar die Form der proximalen Oberfläche, die wiederhergestellt werden soll, annehmen kann.

6. Ein Instrument, das der Forderung 1 zufolge ein Kontaktstück (2) besitzt, das mit der Matrize (1) durch irgendeinen Klebstoff verbunden ist, der auf der Außenseite des zu plombierenden Zahnes aufgetragen wird, was, wenn man es wünscht die Trennung der beiden Teile ermöglicht z. B. beim Gebrauch von Klebestreifen oder Wachs.

7. Ein Instrument, das einen der obenstehenden Forderungen zufolge ebenfalls einen oberen okklusalen Teil (3) besitzt, der wie die okklusale Oberfläche des Zahnes vorgeformt ist und der aus einer Abzweigung der Matrize (1) besteht. Diese Abzweigung geht vom mittleren Teil des oberen Randes des Matrizenbandes (1) ab und wird auf das Material, das zur Zahnfüllung dient gedrückt damit sie die genaue okklusale Form des zu plombierenden Zahnes annimmt.

8. Ein Instrument nach Forderungen 1 und 7, bei welchem die Matrize (1), das Kontaktstück (2) und der obere Teil (3) aus Stahl, Aluminium, anderen Legierungen oder synthetischen Harzen hergestellt werden können.

9. Ein Instrument nach Forderungen 8, bei dem das Kontaktstück (2) und die Matrize (1) aus verschiedenen Materialien, die dem Gebrauch im Mund angepaßt sind, hergestellt werden können.

10. Ein Instrument vom Typ Matrize, das für Zahnfüllungen verwendet wird, das aus einem Band (1) besteht. Dieses ist aus Stahl oder einem anderen Material und wird auf wenigstens einer proximalen Oberfläche des Zahnes angebracht. Es besteht ebenfalls aus einem Matrizenträger (4) und nach der Forderung 1 aus einer Matrize. Der Matrizenträger (4) ist ein Metallband aus Stahl oder aus einer Legierung. Er ist rund, halbrund, viereckig oder rechteckig und auf einer Seite seiner Peripherie geöffnet. Die Extremitäten dieses Ringes auf der Seite der Öffnung besitzen jeweils eine Feder (6). Der Matrizenträger ermöglicht es die Matrize an den zervikalen Rand der Zahnhöhle mit Hilfe der Federn bogenförmig anzupassen. Diese Federn stützen sich auf die proximale Oberfläche des Zahnes der dem zu plombierenden Zahn gegenüber liegt.

**Claims**

1. A matrix-type instrument used for the realization of a dental filling and which includes a band (1) made up of steel, or any material, placed on at least one proximal surface of a tooth, characterized by the fact that, in its central part at the level of the obturation and at the location of the contact with the neighboring tooth, this band has a cut-out in which is secured a detachable piece, whose purpose is a contact point with the neighboring tooth.

2. An instrument according to claim 1, wherein the contact element (2) includes on its surface, facing the involed tooth, a mean of retention (2'), which allows to secure the contact element in the filling material after hardening.

3. An instrument according to claim 2, wherein the mean of retention (2') can be a protuberance or projection or else a chemical bonding such as epoxy resins, cyano-acrylate resins or silicones.

4. An instrument according to claim 1, wherein the contact element is polished on its external surface, facing the neighboring tooth.

5. An instrument according to claim 1, wherein the contact element can be of any shape such as round square, rectangular, trapezoidal, and can have variable dimensions up to the limit corresponding to the proximal involved surface.

6. An instrument according to claim 1, wherein the contact element (2) and the matrix (1) are secured to each other by any bonding mean applied on its external surface, mean which allows separation of the two elements, such as adhesive film or wax.

7. An instrument according to any claim above, wherein it includes an upper occlusal portion (3) pre-formed to the occlusal surface of the tooth and composed of an extension of the band (1) from the central part of the upper edge of this matrix band (1), this upper portion (3) being applied with pressure in the filling material, in order to reproduce in the filling the occlusal sculpture of the tooth to be filled.

8. An instrument according to claim 1 and 7, wherein the matrix band (1) the contact element (2) and the upper portion (3) are made up of steel, aluminium, alloys or synthetic resins.

9. An instrument according to claim 8, wherein the contact element (2) and the matrix (1) are made up of different materials, compatible with oral conditions.

10. A matrix-type instrument, used for the realization of a dental filling, which includes a band (1), made up of steel or any other material, placed on, at least, one proximal surface of a tooth, associated with a matrix retainer (4), according to claim 1 wherein it includes a matrix, and wherein the matrix retainer (4) is a metallic band, made of steel or alloys, of rond or half-rond section, square or rectangular section wire, opened on one part of its periphery, the ends of the band, next to this opening, having each one of them a coil (6), the matrix retainer (4) allowing the curving of the matrix (1) to the cervical edge of dental cavity by mean of its coils (6), which are supported by the opposite proximal surface of the involved tooth.

# pl.unique

## fig 1

↑ A

↓ A'

2

face externe

2'

face interne

## fig 2

2'

2

## fig 3

2'

2'

Coupe suivant

AA'

## fig 4

5

3

## fig 5

4

6

6

## FIG 6

5

6

3

6

4

1

2